# FASCICULE DE BREVET EUROPEEN

(11) **EP 3 289 008 B1**
(45) Date de publication et mention de la délivrance du brevet: **13.03.2019**
(21) Numéro de dépôt: 16723422.8
(22) Date de dépôt: 19.04.2016
(51) Int. Cl.: C08J 9/02

(54) **MOUSSES THERMODURCIES ET PROCÉDÉ DE FABRICATION**
WÄRMEHÄRTBARE SCHÄUME UND VERFAHREN ZUR HERSTELLUNG
THERMOSET FOAMS AND MANUFACUTRING PROCESS

(30) Priorité: 27.04.2015 FR 1553771
(43) Date de publication de la demande: 07.03.2018
(73) Titulaire: Saint-Gobain Isover, 92400 Courbevoie (FR)
(72) Inventeur: SAVONNET, Marie, 75018 Paris (FR); SALOMON, Pierre, 92400 Courbevoie (FR); OBERT, Edouard, 60700 Fleurines (FR)
(74) Mandataire: Saint-Gobain Recherche
(86) Numéro de dépôt international: PCT/FR2016/050906
(87) Numéro de publication internationale: WO 2016/174328

(56) Documents cités:
- WO-A1-2009/019232
- WO-A1-2012/168621
- WO-A2-2012/028810
- David A Dolson ET AL: "Carbohydrate Dehydration Demonstrations", J. Chem. Educ., 2 octobre 1995 (1995-10-02), pages 927-929, XP055250590, DOI: 10.1021/ed072p927 Extrait de l'Internet: URL:http://pubs.acs.org/doi/pdf/10.1021/ed 072p927 [extrait le 2016-02-16]

## Description

La présente invention concerne des mousses solides thermodurcies obtenues par réaction et moussage chimique d'une composition expansible contenant des sucres et un catalyseur acide.

La fabrication de produits d'isolation à base de laine minérale comprend généralement une étape de fabrication des fibres de verre ou de roche par un procédé de centrifugation. Sur leur trajet entre le dispositif de centrifugation et le tapis de collecte des fibres, on pulvérise sur les fibres encore chaudes une composition aqueuse d'encollage, également appelée liant, qui subit ensuite une réaction de thermodurcissement à des températures d'environ 200 °C.

Les résines phénoliques utilisées pendant plusieurs dizaines d'années en tant que liants ont été remplacées de plus en plus par des produits issus de sources renouvelables et n'émettant pas, ou très peu, de formaldéhyde, composé considéré comme pouvant nuire à la santé humaine.

On connaît ainsi de la demande WO 2007/014236 des compositions d'encollage, ou liants, à base de sucres réducteurs et d'amines ou de sels d'ammonium qui, entre autres par réaction de Maillard, durcissent et lient les fibres de verre sur lesquelles elles sont appliquées.

Les demandes WO 2009/019232 et WO 2009/019235 divulguent, de manière similaire, des liants pour fibres de verre contenant au moins un sucre réducteur et du phosphate, sulfate, nitrate ou carbonate d'ammonium, ces réactifs étant susceptibles de réagir par réaction de Maillard après application sur les fibres de verre directement après formation de celles-ci.

La demande WO2012/028810 divulgue des compositions d'encollage à base de sucres non réducteurs et de sels métalliques d'acides minéraux capables de durcir et de lier les fibres de verre sur lesquelles elles sont appliquées.

La demande WO2012/168621 divulgue, de manière similaire des liants pour fibres de verre contenant au moins un sucre non réducteur, au moins un catalyseur de déshydratation du sucre non réducteur, au moins une amine et au moins une insaturation éthylénique activée, ces réactifs étant susceptibles de réagir après application les fibres de verre directement après formation de celle-ci.

Enfin, l'article intitulé « Carbohydrate Dehydration Démonstration » de Dolson et al, publié dans Journal of Chemical Education, volume 72, octobre 1995*,* décrit un test de détection d'hydrates de carbone par carbonisation en présence d'acide sulfurique concentré. La destruction des échantillons par réaction spontanée avec l'acide s'accompagne d'un phénomène d'effervescence (formation d'une mousse liquide) et d'un fort dégagement de chaleur. Le produit réactionnel est un résidu de carbonisation n'ayant aucune tenue mécanique.

La présente invention est basée sur la découverte surprenante que certaines compositions d'encollage à base de sucres, lorsqu'on les chauffe sous forme assez concentrée au-delà d'une certaine température (environ 150 °C), au lieu de les pulvériser sur des fibres de verre chaudes, sont fortement moussantes. Un dégagement gazeux se produit en même temps que la réaction de durcissement. La composition liquide de départ, introduite dans un récipient ouvert et exposée à une chaleur suffisante, augmente de volume, s'épaissit et finit par durcir, donnant lieu, au bout de quelques minutes à une mousse rigide de couleur foncée.

La Demanderesse a effectué de nombreux essais pour déterminer dans quelles conditions expérimentales des compositions à base de sucres, réducteurs ou non réducteurs, formaient des mousses thermodurcies. Sans vouloir être liée par une théorie particulière, la Demanderesse pense que la réaction en jeu dans le durcissement des compositions moussantes de la présente demande est basée sur une réaction de déshydratation du sucre, catalysée par un acide, aboutissant à la formation d'hydroxyméthylfurfural (HMF) susceptible de polymériser.

La présente invention a par conséquent pour objet l'utilisation d'une composition contenant
- un sucre, et
- un catalyseur acide choisi parmi les acides forts, l'acide phosphorique et les sels minéraux acides, la concentration en acides forts étant au moins égale à 0,1 N, la concentration en acide phosphorique étant au moins égale à 0,1 mol/L et la concentration en sels minéraux acides étant telle que le pH de la composition soit inférieur ou égal à 3, les sels minéraux acides étant choisis parmi les sulfates, nitrates, chlorures et bromures d'aluminium, de gallium, de cuivre, de zinc, d'argent, de nickel, de fer et de plomb, caractérisé par le fait que, lorsque le catalyseur acide est choisi dans le groupe formé par les acides forts et l'acide phosphorique, le rapport molaire acide/sucre est inférieur à 1/6, en tant que composition expansible et thermodurcissable pour la fabrication d'un produit isolant de type mousse.

Plus particulièrement la présente invention a pour objet un procédé de fabrication d'une mousse solide thermodurcie, utilisable en tant que produit d'isolation thermique, comprenant les étapes successives suivantes :
(a) mise à disposition d'une composition expansible et thermodurcissable contenant
   - un sucre,
   - un catalyseur acide choisi parmi les acides forts, l'acide phosphorique et les sels minéraux acides, la concentration en acides forts étant au moins égale à 0,1 N, la concentration en acide phosphorique étant au moins égale à 0,1 mol/L et la concentration en sels minéraux acides étant telle que le pH de la composition soit inférieur ou égal à 3, les sels minéraux acides étant choisis parmi les sulfates, nitrates, chlorures et bromures d'aluminium, de gallium, de cuivre, de zinc, d'argent, de nickel, de fer et de plomb, caractérisé par le fait que, lorsque le catalyseur acide est choisi dans le groupe formé par les acides forts et l'acide phosphorique, le rapport molaire acide/sucre est inférieur à 1/6,
(b) introduction de la composition expansible et thermodurcissable dans un moule ou application de la composition expansible sur un support en un film d'une épaisseur au moins égale à 1 mm,
(c) chauffage de la composition expansible et thermodurcissable à une température au moins égale à 140 °C de manière à former un bloc de mousse solide thermodurcie.

Le sucre utilisable dans la présente invention peut être un sucre réducteur ou un sucre non réducteur.

On entend par sucres réducteurs les hydrates de carbone de formule C*ₙ*(H₂O)*ₚ* présentant au moins un groupe aldéhyde ou cétone (groupe réducteur). Les sucres réducteurs utilisables dans la présente invention englobent les oses (monosaccharides) et les osides (disaccharides, oligosaccharides et polysaccharides).

On utilisera de préférence les hexoses, à savoir les sucres comportant six atomes de carbone, tels que le glucose, le mannose, le galactose et le fructose.

Le lactose ou le maltose sont des exemples de disaccharides utilisables en tant que sucres réducteurs.

On pourra également utiliser de manière avantageuse des hydrolysats d'amidon obtenus par hydrolyse enzymatique ou hydrolyse acide d'amidon.

Les sucres non-réducteurs utilisés de préférence dans la présente invention sont le saccharose et le tréhalose.

Dans toute la demande le terme « sucre », même utilisé au singulier, englobe toujours également des mélanges de sucres réducteurs et/ou non-réducteurs.

L'acide catalysant la déshydratation du sucre peut être un acide fort, c'est-à-dire un acide qui se dissocie totalement lorsqu'il est dissous dans l'eau. Les acides forts utilisables englobent les acides halogénhydriques, à savoir l'acide chlorhydrique, l'acide iodhydrique et l'acide bromhydrique, l'acide sulfurique (H₂SO₄), l'acide nitrique (HNO₃), l'acide chlorique (HClO₃), l'acide perchlorique (HClO₄), l'acide manganique (H₂MnO₄), l'acide permanganique (HMnO₄), l'acide trifluoroacétique, et les superacides englobant l'acide fluoroantimonique (HF.SbF₅), l'acide magique (HSO₃F.SbF₅), l'acide trifluorométhanesulfonique (HSO₃CF₃), l'acide fluorosulfurique (HSO₃F) et l'acide disulfurique (H₂S₂O₇).

Pour catalyser efficacement le moussage et le durcissement des compositions expansibles l'acide fort doit être utilisé en une concentration au moins égale à 0,1 N (pH = 1), de préférence au moins égale à 0,5 N.

Bien que l'acide phosphorique ne soit pas un acide fort (pKa1 d'environ 2), il peut jouer le rôle de catalyseur acide de déshydratation à condition d'être utilisé à une concentration au moins égale à 0,1 mol/L, de préférence au moins égale à 0,2 mol/L.

Lorsque le catalyseur acide est choisi parmi les acides forts et l'acide phosphorique, le rapport molaire acide / sucre est inférieur à 1/6, de préférence compris entre 1/40 et 1/8, en particulier entre 1/35 et 1/9, idéalement entre 1/34 et 1/10. Lorsque le sucre utilisé contient des oligomères ou polymères de motifs monomères d'hydrate de carbone (par exemple les hydrolysats d'amidon contenant des motifs monomères de glucose) le nombre de moles de sucres est égal au nombre de moles de motifs monomères

Enfin, le catalyseur acide peut être un sel minéral acide. On entend par « sel minéral acide » un sel minéral qui, lorsqu'il est introduit dans de l'eau déminéralisée, permet d'en abaisser le pH à une valeur inférieure à 3.

Ces sels minéraux acides n'englobent pas les sels minéraux des métaux alcalins et alcalino-terreux, mais englobent un grand nombre de sels de métaux de transition.

On peut citer à titre d'exemples de sels minéraux acides les sulfates, nitrates, chlorures et bromures d'aluminium, de gallium, de cuivre, de zinc, d'argent, de nickel, de fer et de plomb.

La Demanderesse a obtenu de bons résultats avec le sulfate d'aluminium, le sulfate de cuivre et le nitrate de cuivre qui sont particulièrement préférés.

Les sels minéraux acides seront utilisés en une concentration telle que le pH de la composition soit inférieur ou égal à 3, de préférence inférieur à 2,5 et idéalement inférieur à 2.

Les compositions expansibles et thermodurcissables utilisées dans la présente invention pour la formation de mousses solides contiennent généralement de l'eau. Cette eau joue essentiellement le rôle de solvant du sucre.

Etant donné que la composition expansible utilisée dans le procédé de la présente invention n'a pas besoin d'être finement dispersée dans l'air, il est moins crucial que dans le cas d'un liant pour fibres minérales, de veiller à ce que sa viscosité soit suffisamment faible. Tandis qu'un liant aqueux pour fibres minérales comporte, au moment de la pulvérisation, au moins 90 %, voire 95 % d'eau, les compositions expansibles de la présente invention sont beaucoup plus concentrées et visqueuses.

Elles contiennent avantageusement au plus 60 % en poids d'eau, en particulier au plus 35 % en poids, de préférence au plus 25 % en poids, plus préférentiellement au plus 15 % en poids et idéalement au plus 5 % en poids d'eau.

La teneur en matières sèches de la composition expansible avant chauffage est donc au moins égale à 40 % en poids, en particulier au moins égale à 65 % en poids, de préférence au moins égale à 75 %, plus préférentiellement au moins égale à 85 % en poids et idéalement au moins égale à 95 % en poids.

Le sucre représente au total au moins 70 %, de préférence au moins 80 %, en particulier au moins 90 % du poids sec de la composition expansible.

Bien que le sucre et le catalyseur acide soient les constituants majoritaires et essentiels de la composition expansible, celle-ci peut contenir un certain nombre d'autres adjuvants et additifs destinés à améliorer les propriétés des mousses thermodurcies finales ou à réduire le coût de production. La quantité totale de ces adjuvants et additifs ne dépasse toutefois de préférence pas 30 % du poids sec de la composition expansible.

Ainsi, la composition expansible peut contenir par exemple un ou plusieurs agents tensioactifs destinés à réduire la dimension moyenne et la dispersion des tailles des pores de la mousse finale ou à faciliter l'incorporation d'une charge. La composition expansible contient avantageusement de 1 à 15 % en poids, de préférence de 2 à 10 % en poids, rapportés au poids sec de la composition expansible totale, d'un ou plusieurs agents tensioactifs.

La composition expansible utilisée dans la présente invention peut contenir en outre jusqu'à 20 % en poids, de préférence jusqu'à 10 % en poids, rapportés au poids sec de la composition expansible totale, d'une ou plusieurs charges minérales ou organiques.

Enfin, la composition expansible peut contenir un ou plusieurs autres additifs utilisés classiquement dans l'industrie de la mise en oeuvre et transformation des polymères tels que des colorants, pigments, agents anti-bactériens ou anti-fongiques, agents ignifugeants, absorbeurs UV, agents hydrophobes. Ces additifs représentent au total de préférence au plus 10 % du poids sec de la composition.

Dans le procédé de la présente invention des compositions réactives, connues en tant que telles sous forme très diluée, sont donc utilisées de manière totalement différente de celle décrite dans les documents de l'état de la technique mentionnés en introduction. Elles ne sont pas pulvérisées sous forme de fines gouttelettes sur des fibres minérales chaudes en vue de la formation d'un matelas de fibres collées entre elles, mais restent sous forme compacte, non dispersée. Leur teneur en matières sèches est considérablement plus élevée que celle des compositions de l'état de la technique.

Lorsque la composition expansible est étalée sous forme d'un film continu sur un support, l'épaisseur du film, avant chauffage, c'est-à-dire avant expansion et durcissement, est de préférence au moins égale à 2 mm, en particulier au moins égale à 5 mm, et plus préférentiellement au moins égale à 10 mm.

Le volume du bloc de mousse formé peut varier entre de très larges limites. Lorsque la composition expansible est utilisée dans un procédé continu formant par exemple des bandes ou profilés de matériaux isolants, il est potentiellement infini. Lorsque la composition expansible est utilisée pour former des blocs discrets, par exemple des plaques ou feuilles de mousses, sa quantité est de préférence telle que le volume de chaque bloc de mousse solide thermodurcie soit au moins égal à 500 cm³, de préférence au moins égal à 0,001 m³, en particulier au moins égal à 0,01 m³.

Le bloc de mousse se présente de préférence sous forme d'une plaque.

Pour faire réagir le sucre il est nécessaire de chauffer la composition expansible à une température d'au moins 140 °C. La température réactionnelle sera de préférence comprise entre 150 °C et 180 °C. Cette température est, bien entendu, celle mesurée au coeur du mélange réactionnel.

Pour chauffer la composition expansible à l'étape (c) on pourra utiliser en principe n'importe quel moyen usuel connu dans le domaine de la mise en oeuvre et transformation des polymères, tels que l'air chaud, le rayonnement thermique, les micro-ondes ou la mise en contact avec un support chaud (moule).

Bien entendu, la température du moyen de chauffage (étuve, support, moule) pourra être supérieure à la température réactionnelle mentionnée ci-dessus, par exemple comprise entre 160 et 210 °C.

La présente invention a également pour objet une mousse solide susceptible d'être obtenue par le procédé objet de la présente invention.

Les mousses solides préparées par le procédé de l'invention sont d'une couleur marron foncé à noire. Leur masse volumique est comprise entre 30 et 60 kg/m³.

Elles présentent une porosité fermée avec un diamètre moyen des pores, déterminé par tomographie à rayons X, compris entre 100 et 800 nm.

### Exemple 1

### Sels minéraux

On prépare plusieurs compositions expansibles thermodurcissables en ajoutant une solution aqueuse du catalyseur acide (sel minéral acide) à une poudre de glucose monohydrate. On agite le mélange à température ambiante afin de disperser la poudre.

Le Tableau 1a indique les quantités respectives de sucre et de sel minéral acide, exprimées en matières sèches, la concentration en mol/L du catalyseur acide ainsi que l'extrait sec total des compositions préparées.

Chacune des compositions est introduite dans une coupelle en aluminium à fond plat (5 cm de diamètre) en un film ayant une épaisseur d'environ 1 mm. Les coupelles sont introduites dans une étuve chauffée à 200 °C. Au bout de 20 minutes, on les retire, on les laisse refroidir à température ambiante et l'on observe l'épaisseur de la mousse formée :
Echelle de notation :
- : moins de 0,5 cm
+ : 0,5 à 1 cm
++ : 1,1 à 2 cm
+++ : 2,1 à 3 cm
++++ : 3,1 à 4 cm
+++++ : plus de 4 cm

**Tableau 1a : Sels minéraux acides**

| Sucre | Catalyseur acide | Concentration catalyseur acide | Extrait sec | Epaisseur de la mousse |
|---|---|---|---|---|
| 85 parts de D-glucose monohydrate | 15 parts Al₂(SO₄)₃ | 0,6 mol/L | 60 % | +++++ |
| 92,5 parts de D-glucose monohydrate | 7,5 parts Al₂(SO₄)₃ | 0,3 mol/L | 60 % | +++++ |
| 98,5 parts de D-glucose monohydrate | 1,5 parts Al₂(SO₄)₃ | 0,06mol/L | 60 % | +++++ |
| 99,85 parts de D-glucose monohydrate | 0,15 parts Al₂(SO₄)₃ | 0,006 mol/L | 60 % | +++++ |
| 85 parts de D-glucose monohydrate | 15 parts de CuSO₄ | 1,4 mol/L | 60 % | +++++ |
| 85 parts de D-glucose monohydrate | 15 parts de Cu(NO₃)₂ | 1,2 mol/L | 60 % | +++++ |

Les mousses formées sont toutes de couleur marron à noire.

A titre de comparaison on prépare des compositions similaires soit en omettant le catalyseur acide ou en remplaçant les sels minéraux acides (Al₂(SO₄)₃ CuSO₄ et Cu(NO₃)₂) par des sels minéraux ne permettant pas d'acidifier la composition jusqu'à un pH inférieur à 3.

Les résultats sont présentés dans le Tableau 1b ci-dessous.

**Tableau 1b : sels minéraux comparatifs**

| Sucre | Catalyseur acide | Concentration catalyseur acide | Extrait sec | Epaisseur de la mousse |
|---|---|---|---|---|
| 100 parts de D-glucose monohydrate | - | - | 60 % | - |
| 85 parts de D-glucose monohydrate | 15 parts de MgSO₄ | 1,9 mol/L | 60 % | - |
| 85 parts de D-glucose monohydrate | 15 parts de CaSO₄ | 1,3 mol/L | 60 % | - |
| 85 parts de D-glucose monohydrate | 15 parts de AlPO₄ | 1,8 mol/L | 60 % | - |
| 85 parts de D-glucose monohydrate | 15 parts de NaCl | 3,9 mol/L | 60% | - |

Ces échantillons sont de couleur jaune à caramel au bout de 20 minutes de cuisson. On n'observe aucune formation de mousse.

### Exemple 2

### Acides forts et acide phosphorique

On prépare plusieurs compositions expansibles thermodurcissables en ajoutant à 9 g d'une poudre de glucose monohydrate 6 ml une solution aqueuse du catalyseur acide (acide fort ou acide phosphorique) ayant la concentration indiquée aux tableaux 2a et 2b. On agite le mélange à température ambiante afin d'y disperser la poudre.

Le Tableau 2a indique la concentration en mol/L du catalyseur acide utilisé ainsi que l'extrait sec total des compositions préparées.

Chacune des compositions est introduite dans une coupelle en aluminium à fond plat (5 cm de diamètre) en un film ayant une épaisseur d'environ 1 mm. Les coupelles sont introduites dans une étuve chauffée à 200 °C. Au bout de 20 minutes, on les retire, on les laisse refroidir à température ambiante et l'on observe l'épaisseur de la mousse formée. L'échelle de notation est identique à celle de l'Exemple 1.

**Tableau 2a Acides forts et acide phosphorique**

| Sucre | Catalyseur acide | Masse catalyseur acide | Concentration catalyseur acide | Extrait sec | Epaisseur de la mousse |
|---|---|---|---|---|---|
| 100 parts de D-glucose monohydrate | HCl | 219 mg | 1 mol/L | 60 % | +++++ |
| 100 parts de D-glucose monohydrate | H₂SO₄ | 164 mg | 0,28 mol/L | 60 % | +++++ |
| 100 parts de D-glucose monohydrate | H₂SO₄ | 59 mg | 0,1 mol/L | 60 % | +++++ |
| 100 parts de D-glucose monohydrate | HNO3 | 453 mg | 1,2 mol/L | 60 % | ++ |
| 100 parts de D-glucose monohydrate | H₃PO₄ | 118 mg | 0,20 mol/L | 60 % | ++++ |

L'acide chlorhydrique, l'acide sulfurique et l'acide phosphorique utilisés à une concentration supérieure ou égale à 0,1 mol/L donnent des mousses volumineuses de couleur marron à noire. De manière inexplicable l'acide nitrique, même à une concentration importante, mousse relativement moins que les autres acides.

A titre de comparaison on utilise les mêmes acides en une concentration de 0,01 mol/L. Les résultats sont présentés dans le Tableau 2b ci-après.

**Tableau 2b Acides forts et acide phosphorique (comparatif)**

| Sucre | Catalyseur acide | Masse catalyseur acide | Concentration catalyseur acide | Extrait sec | Epaisseur de la mousse |
|---|---|---|---|---|---|
| 100 parts de D-glucose monohydrate | HCl | 2 mg | 0,01 mol/L | 60 % | - |
| 100 parts de D-glucose monohydrate | H₂SO₄ | 6 mg | 0,01 mol/L | 60 % | - |
| 100 parts de D-glucose monohydrate | HNO3 | 4 mg | 0,01 mol/L | 60 % | - |
| 100 parts de D-glucose monohydrate | H₃PO₄ | 6 mg | 0,01 mol/L | 60 % | - |

Aucune mousse ne se forme.

La Demanderesse a également effectué une série d'essais en mettant en contact du D-glucose avec des quantités croissantes d'acide acétique (acide faible) et en chauffant le mélange dans les mêmes conditions. Même à une concentration d'acide acétique supérieure à 15 mol/L aucune formation de mousse n'est observée.

## Revendications

1. Procédé de fabrication d'une mousse solide thermodurcie, comprenant les étapes successives suivantes :
(a) mise à disposition d'une composition expansible et thermodurcissable contenant
- un sucre,
- un catalyseur acide choisi parmi les acides forts, l'acide phosphorique et les sels minéraux acides, la concentration en acides forts étant au moins égale à 0,1 N, la concentration en acide phosphorique étant au moins égale à 0,1 mol/L et la concentration en sels minéraux acides étant telle que le pH de la composition soit inférieur ou égal à 3, les sels minéraux acides étant choisis parmi les sulfates, nitrates, chlorures et bromures d'aluminium, de gallium, de cuivre, de zinc, d'argent, de nickel, de fer et de plomb,
(b) introduction de la composition expansible et thermodurcissable dans un moule ou application de la composition expansible sur un support en un film d'une épaisseur au moins égale à 1 mm,
(c) chauffage de la composition expansible et thermodurcissable à une température au moins égale à 140 °C de manière à former un bloc de mousse solide thermodurcie,
**caractérisé par le fait que**, lorsque le catalyseur acide est choisi dans le groupe formé par les acides forts et l'acide phosphorique, le rapport molaire acide / sucre est inférieur à 1/6.

2. Procédé selon la revendication 1, **caractérisé par le fait que**, lorsque le catalyseur acide est choisi dans le groupe formé par les acides forts et l'acide phosphorique, le rapport molaire acide / sucre est compris entre 1/40 et 1/8, en particulier entre 1/35 et 1/9, idéalement entre 1/34 et 1/10.

3. Procédé selon la revendication 1 ou 2, **caractérisé par le fait que** l'épaisseur du film est au moins égale à 2 mm, de préférence au moins égale à 5 mm, en particulier au moins égale à 10 mm.

4. Procédé selon l'une quelconque des revendications précédentes, **caractérisé par le fait que** le bloc de mousse solide thermodurcie est une plaque.

5. Procédé selon l'une quelconque des revendications précédentes, **caractérisé par le fait que** la composition expansible contient au plus 60 % en poids, de préférence au plus 25 % en poids, plus préférentiellement au plus 15 % en poids et en particulier au plus 5 % en poids d'eau.

6. Procédé selon l'une quelconque des revendications précédentes, **caractérisé par le fait que** le sucre représente au moins 70 %, de préférence au moins 80 %, en particulier au moins 90 % du poids sec de la composition expansible.

7. Procédé selon l'une quelconque des revendications précédentes, **caractérisé par le fait que** le sucre est choisi parmi les sucres réducteurs et les sucres non-réducteurs, de préférence parmi les sucres réducteurs.

8. Procédé selon la revendication 7, **caractérisé par le fait que** le sucre est un sucre réducteur choisi parmi le glucose et les hydrolysats d'amidon.

9. Procédé selon la revendication 1, **caractérisé par le fait que** la concentration en acide fort est comprise entre 0,1 et 1,5 N, de préférence entre 0,15 et 1,2 N, en particulier entre 0,2 et 1,0 N.

10. Procédé selon l'une quelconque des revendications précédentes, **caractérisé par le fait que** la composition expansible contient en outre jusqu'à 20 % en poids, de préférence jusqu'à 10 % en poids, rapportés au poids sec de la composition expansible totale, d'une ou plusieurs charges minérales ou organiques.

11. Mousse solide susceptible d'être obtenue par le procédé selon l'une quelconque des revendications précédentes.

12. Mousse solide selon la revendication 11, **caractérisée par le fait qu'**elle présente une masse volumique comprise entre 30 et 60 kg/m³

13. Mousse solide selon la revendication 11 ou 12, **caractérisée par le fait qu'**elle présente une porosité fermée.

14. Mousse solide selon l'une des revendications 11 à 13, **caractérisée par le fait que** le diamètre moyen des pores déterminé par tomographie à rayons X est compris entre 100 et 800 nm.

15. Utilisation d'une composition contenant
- un sucre,
- un catalyseur acide choisi parmi les acides forts, l'acide phosphorique et les sels minéraux acides, la concentration en acides forts étant au moins égale à 0,1 N, la concentration en acide phosphorique étant au moins égale à 0,1 mol/L et la concentration en sels minéraux acides étant telle que le pH de la composition soit inférieur ou égal à 3, les sels minéraux acides étant choisis parmi les sulfates, nitrates, chlorures et bromures d'aluminium, de gallium, de cuivre, de zinc, d'argent, de nickel, de fer et de plomb, **caractérisé par le fait que**, lorsque le catalyseur acide est choisi dans le groupe formé par les acides forts et l'acide phosphorique, le rapport molaire acide/sucre est inférieur à 1/6, en tant que composition expansible et thermodurcissable pour la fabrication d'un produit isolant de type mousse.

## Patentansprüche

1. Verfahren zur Herstellung eines duroplastischen Schaumstoffs, das die folgenden aufeinanderfolgenden Schritte umfasst:
(a) Bereitstellen einer schäumbaren und in Wärme aushärtbaren Zusammensetzung, enthaltend:
- einen Zucker,
- einen Säurekatalysator, ausgewählt aus starken Säuren, Phosphorsäure und sauren Mineralsalzen, wobei die Konzentration der starken Säuren mindestens gleich 0,1 N ist, die Konzentration der Phosphorsäure mindestens gleich 0,1 mol/l ist und die Konzentration der sauren Mineralsalze derart ist, dass der pH der Zusammensetzung kleiner oder gleich 3 ist, wobei die sauren Mineralsalze aus Sulfaten, Nitraten, Chloriden und Bromiden von Aluminium, Gallium, Kupfer, Zink, Silber, Nickel, Eisen und Blei ausgewählt sind,
(b) Einbringen der schäumbaren und in Wärme aushärtbaren Zusammensetzung in eine Form oder Aufbringen der schäumbaren Zusammensetzung auf einen Träger in Form einer Schicht mit einer Dicke, die mindestens gleich 1 mm ist,
(c) Erwärmen der schäumbaren und in Wärme aushärtbarenden Zusammensetzung auf eine Temperatur, die mindestens gleich 140 °C ist, um einen Block aus duroplastischem Schaumstoff zu bilden,
**dadurch gekennzeichnet, dass**, wenn der Säurekatalysator aus der Gruppe bestehend aus starken Säuren und Phosphorsäure ausgewählt wird, das Molverhältnis Säure/Zucker kleiner als 1/6 ist.

2. Verfahren nach Anspruch 1, **dadurch gekennzeichnet, dass**, wenn der Säurekatalysator aus der Gruppe bestehend aus starken Säuren und Phosphorsäure ausgewählt wird, das Molverhältnis Säure/Zucker zwischen 1/40 und 1/8, insbesondere zwischen 1/35 und 1/9, idealerweise zwischen 1/34 und 1/10 liegt.

3. Verfahren nach Anspruch 1 oder 2, **dadurch gekennzeichnet, dass** die Dicke der Schicht mindestens gleich 2 mm, vorzugsweise mindestens gleich 5 mm, insbesondere mindestens gleich 10 mm ist.

4. Verfahren nach einem der vorhergehenden Ansprüche, **dadurch gekennzeichnet, dass** der Block aus duroplastischem Schaumstoff eine Platte ist.

5. Verfahren nach einem der vorhergehenden Ansprüche, **dadurch gekennzeichnet, dass** die schäumbare Zusammensetzung höchstens 60 Gew.-%, vorzugsweise höchstens 25 Gew.-%, stärker bevorzugt höchstens 15 Gew.-% und insbesondere höchstens 5 Gew.-% Wasser enthält.

6. Verfahren nach einem der vorhergehenden Ansprüche, **dadurch gekennzeichnet, dass** der Zucker mindestens 70 %, vorzugsweise mindestens 80 %, insbesondere mindestens 90 % des Trockengewichts der schäumbaren Zusammensetzung ausmacht.

7. Verfahren nach einem der vorhergehenden Ansprüche, **dadurch gekennzeichnet, dass** der Zucker aus reduzierenden Zuckern und nicht reduzierenden Zuckern, vorzugsweise aus reduzierenden Zuckern ausgewählt ist.

8. Verfahren nach Anspruch 7, **dadurch gekennzeichnet, dass** der Zucker ein reduzierender Zucker ist, der aus Glucose und Stärkehydrolysaten ausgewählt ist.

9. Verfahren nach Anspruch 1, **dadurch gekennzeichnet, dass** die Konzentration der starken Säure zwischen 0,1 und 1,5 N, vorzugsweise zwischen 0,15 und 1,2 N, insbesondere zwischen 0,2 und 1,0 N liegt.

10. Verfahren nach einem der vorhergehenden Ansprüche, **dadurch gekennzeichnet, dass** die schäumbare Zusammensetzung außerdem bis zu 20 Gew.-%, vorzugsweise bis zu 10 Gew.-%, bezogen auf das Trockengewicht der gesamten schäumbaren Zusammensetzung, eines oder mehrerer mineralischer oder organischer Füllstoffe enthält.

11. Schaumstoff, der durch das Verfahren nach einem der vorhergehenden Ansprüche erhalten werden kann.

12. Schaumstoff nach Anspruch 11, **dadurch gekennzeichnet, dass** er eine Dichte zwischen 30 und 60 kg/m³ aufweist.

13. Schaumstoff nach Anspruch 11 oder 12, **dadurch gekennzeichnet, dass** er eine geschlossene Porosität aufweist.

14. Schaumstoff nach einem der Ansprüche 11 bis 13, **dadurch gekennzeichnet, dass** der durch Röntgentomographie bestimmte mittlere Porendurchmesser zwischen 100 und 800 nm liegt.

15. Verwendung einer Zusammensetzung, enthaltend:
- einen Zucker,
- einen Säurekatalysator, ausgewählt aus starken Säuren, Phosphorsäure und sauren Mineralsalzen, wobei die Konzentration der starken Säuren mindestens gleich 0,1 N ist, die Konzentration der Phosphorsäure mindestens gleich 0,1 mol/l ist und die Konzentration der sauren Mineralsalze derart ist, dass der pH der Zusammensetzung kleiner oder gleich 3 ist, wobei die sauren Mineralsalze aus Sulfaten, Nitraten, Chloriden und Bromiden von Aluminium, Gallium, Kupfer, Zink, Silber, Nickel, Eisen und Blei ausgewählt sind, **dadurch gekennzeichnet, dass**, wenn der Säurekatalysator aus der Gruppe, bestehend aus starken Säuren und Phosphorsäure, ausgewählt wird, das Molverhältnis Säure/Zucker kleiner als 1/6 ist, als schäumbare und in Wärme aushärtbare Zusammensetzung für die Herstellung eines Dämmprodukts vom Schaumstofftyp.

## Claims

1. A process for the manufacture of a solid thermoset foam comprising the following successive stages:
(a) providing an expandable and thermosetting composition containing:
- a sugar,
- an acid catalyst chosen from strong acids, phosphoric acid and acidic inorganic salts, the concentration of strong acids being at least equal to 0.1 N, the concentration of phosphoric acid being at least equal to 0.1 mol/l and the concentration of acidic inorganic salts being such that the pH of the composition is less than or equal to 3, the acidic inorganic salts being chosen from aluminum, gallium, copper, zinc, silver, nickel, iron and lead sulfates, nitrates, chlorides and bromides,
(b) introducing the expandable and thermosetting composition into a mold or applying the expandable composition to a support as a film with a thickness at least equal to 1 mm,
(c) heating the expandable and thermosetting composition to a temperature at least equal to 140°C, so as to form a block of solid thermoset foam,
**characterized by** the fact that, when the acid catalyst is chosen from the group consisting of strong acids and phosphoric acid, the acid/sugar molar ratio is less than 1/6.

2. The process as claimed in claim 1, **characterized in that**, when the acid catalyst is chosen from the group consisting of strong acids and phosphoric acid, the acid/sugar molar ratio is comprised between 1/40 and 1/8, in particular between 1/35 and 1/9 and ideally between 1/34 and 1/10.

3. The process as claimed in claim 1 or 2, **characterized in that** the thickness of the film is at least equal to 2 mm, preferably at least equal to 5 mm and in particular at least equal to 10 mm.

4. The process as claimed in any one of the preceding claims, **characterized in that** the block of solid thermoset foam is a slab.

5. The process as claimed in any one of the preceding claims, **characterized in that** the expandable composition contains at most 60% by weight, preferably at most 25% by weight, more preferably at most 15% by weight and in particular at most 5% by weight of water.

6. The process as claimed in any one of the preceding claims, **characterized in that** the sugar represents at least 70%, preferably at least 80% and in particular at least 90% of the dry weight of the expandable composition.

7. The process as claimed in any one of the preceding claims, **characterized in that** the sugar is chosen from reducing sugars and nonreducing sugars, preferably from reducing sugars.

8. The process as claimed in claim 7, **characterized in that** the sugar is a reducing sugar chosen from glucose and starch hydrolysates.

9. The process as claimed in claim 1, **characterized in that** the concentration of strong acid is between 0.1 and 1.5 N, preferably between 0.15 and 1.2 N and in particular between 0.2 and 1.0 N.

10. The process as claimed in any one of the preceding claims, **characterized in that** the expandable composition additionally contains up to 20% by weight, preferably up to 10% by weight, with respect to the dry weight of the total expandable composition, of one or more inorganic or organic fillers.

11. A solid foam obtainable by the process as claimed in any one of the preceding claims.

12. The solid foam as claimed in claim 11, **characterized in that** it exhibits a density of between 30 and 60 kg/m³.

13. The solid foam as claimed in claim 11 or 12, **characterized in that** it exhibits a closed porosity.

14. The solid foam as claimed in one of claims 11 to 13, **characterized in that** the mean diameter of the pores, determined by X-ray tomography, is between 100 and 800 nm.

15. The use of a composition containing:
- a sugar,
- an acid catalyst chosen from strong acids, phosphoric acid and acidic inorganic salts, the concentration of strong acids being at least equal to 0.1 N, the concentration of phosphoric acid being at least equal to 0.1 mol/l and the concentration of acidic inorganic salts being such that the pH of the composition is less than or equal to 3, the acidic inorganic salts being chosen from aluminum, gallium, copper, zinc, silver, nickel, iron and lead sulfates, nitrates, chlorides and bromides, **characterized by** the fact that, when the acid catalyst is chosen from the group consisting of strong acids and phosphoric acid, the acid/sugar molar ratio is less than 1/6,
as expandable and thermosetting composition for the manufacture of an insulating product of foam type.
